# EUROPÄISCHE PATENTSCHRIFT

(11) **EP 3 999 684 B1**
(45) Veröffentlichungstag und Bekanntmachung des Hinweises auf die Patenterteilung: **20.08.2025**
(21) Anmeldenummer: 20727276.6
(22) Anmeldetag: 20.05.2020
(51) Int. Cl.: D21F 7/08

(54) **BESPANNUNG UND VERFAHREN**
PAPER MACHINE CLOTHING AND METHOD
HABILLAGE ET PROCÉDÉ

(30) Priorität: 15.07.2019 DE 102019119047
(43) Veröffentlichungstag der Anmeldung: 25.05.2022
(73) Patentinhaber: Voith Patent GmbH, 89522 Heidenheim (DE)
(72) Erfinder: EBERHARDT, Robert, 73479 Ellwangen (DE)
(74) Vertreter: Voith Patent GmbH - Patentabteilung
(86) Internationale Anmeldenummer: PCT/EP2020/064037
(87) Internationale Veröffentlichungsnummer: WO 2021/008758

(56) Entgegenhaltungen:
- DE-A1- 102016 206 384
- DE-C1- 19 803 493
- DE-U1- 202012 100 695

## Beschreibung

Die Erfindung betrifft eine Bespannung insbesondere einen Pressfilz für eine Maschine zur Herstellung oder Verarbeitung einer Faserstoffbahn nach dem Oberbegriff des Anspruchs 1 sowie ein Verfahren zur Herstellung einer Bespannung nach dem Oberbegriff des Anspruchs 10.

Bei der Herstellung von Faserstoffbahnen wie Papier werden seit langem in der Pressenpartie, aber auch an anderen Stellen wie z.B. in der Trockenpartie, Bespannungen verwendet, bei denen auf einer Grundstruktur eine Auflage auf Vliesfasern angeordnet ist. Solche Auflagen können aus Fasern verschiedener Feinheit bestehen. Die Verbindung der Vliesauflage mit der Grundstruktur, aber auch die Verankerung der Vliesfasern untereinander wird durch eine Vernadelung erzielt.

In manchen Anwendungen wird jedoch eine verbesserte Verankerung der Vliesfasern untereinander oder auch mit der Grundstruktur benötigt. Hierzu sind aus dem Stand der Technik verschiedene Ansätze bekannt.

So beschreibt die WO 85/01693 beispielsweise die Verwendung von Schmelzkleber mit einem niedrigeren Schmelzpunkt als die Vliesfasern. Beim Erhitzen schmilzt dieser Kleber und verbindet die Vliesfasern miteinander.

Alternativ wird in der DE 198 03 493 vorgeschlagen, in das Faservlies Bikomponentenfasern einzubringen, die aus einer Trägerkomponente und einer tiefer schmelzenden Klebekomponente bestehen. Auch hier werden durch die Klebekomponente Vliesfasern miteinander verbunden.

Die Schriften DE 20 2012 10695 U1 und DE 10 2016 206384 A1 zeigen ebenfalls Bespannungen.

Nachteilig an diesen Verfahren ist es, dass zur Verbindung der Vliesfasern untereinander oder mit der Grundstruktur ein zusätzliches Klebematerial in das Faservlies eigebracht ist. Dieses Material muss einen niedrigeren Schmelzpunkt aufweisen als die übrigen Vliesfasern. Dadurch werden die Möglichkeiten beim Design eines solchen Filzes eingeschränkt. Zudem muss vermieden werden, dass die Schmelztemperatur dieses Klebematerials zu nahe bei der Betriebstemperatur der Anlage liegt (z.B. bei Trockenfilzen in der Trockenpartie), da sich dann die Klebeverbindungen im Betrieb der Bespannung wieder lösen.

Es ist daher eine Aufgabe der vorliegenden Erfindung eine Bespannung vorzugschlagen, die eine verbesserte Verankerung der Vliesfasern untereinander oder mit der Grundstruktur ermöglicht, ohne die Einschränkungen des Standes der Technik bei der Materialauswahl.

Es ist weiterhin eine Aufgabe der Erfindung sicherzustellen, dass diese Verankerung auch bei hohen Betriebstemperaturen der Bespannung erhalten bleibt.

Die Aufgaben werden vollständig gelöst durch eine Bespannung gemäß dem Kennzeichen des Anspruchs 1 sowie ein Verfahren zur Herstellung einer Bespannung nach Anspruch 10. Vorteilhafte Ausführungen werden in den abhängigen Ansprüchen beschrieben,

Hinsichtlich der Bespannung wird die Aufgabe gelöst durch eine Bespannung, insbesondere einen Pressfilz für eine Maschine zur Herstellung oder Verarbeitung einer Faserstoffbahn, umfassend eine Grundstruktur und zumindest eine auf der Grundstruktur angeordnete Lage aus Vliesfasern. Erfindungsgemäß ist vorgesehen, dass die Lage aus Vliesfasern Bindefasern sowie weitere Fasern aufweist, wobei sich die Bindefasern und die weiteren Fasern in zumindest einer Materialeigenschaft unterscheiden, und wobei zumindest ein Teil der Bindefasern mit einer oder mehreren weiteren Fasern und/oder der Grundstruktur über eine stoffschlüssige Fügeverbindung, insbesondere eine Schweißverbindung verbunden sind.

Bei einer Bespannung wie oben beschrieben dienen die Bindefasern über die stoffschlüssigen Fügeverbindungen der Erhöhung der inneren Festigkeit der Vlieslage bzw. der besseren Verbindung der Vlieslage mit der Grundstruktur. Jedoch ist man bei der Materialwahl dieser Bindefasern weitgehend frei. Insbesondere entfällt die aus dem Stand der Technik bekannte Limitierung, dass der Schmelzpunkt der Bindefasern unterhalb des Schmelzpunktes der übrigen Fasern liegen muss. Dies kann zwar so gewählt werden, wenn dies vom Anwender oder Hersteller gewünscht ist, jedoch ist dies nicht notwendig, um die Erhöhung der Festigkeit zu erzielen.

Es ist vorgesehen, dass die Verbindung der Bindefasern mit den weiteren Fasern über eine Schweißverbindung erfolgt. Hierzu müssen die Fügepartner, also in dem Fall die Binde- bzw. weiter Faser, nur im Bereich der Verbindungsstelle lokal angeschmolzen werden. Auf ein Durcherhitzen der gesamten Vlieslage, wie bei der Verwendung der bekannten Schmelzkleber kann daher verzichtet werden. Dies ist nicht nur im Hinblick auf den notwendigen Energieeinsatz vorteilhaft. Es werden so auch strukturelle Veränderungen bzw. Schwächungen der weiteren Vliesfasern vermieden.

Wenn nicht explizit anders erwähnt soll im Rahmen dieser Anmeldung die Gesamtheit der Vliesfasern, die auf einer Seite der Bespannung angeordnet sind, als die Vlieslage dieser Seite bezeichnet werden. Eine solche Vlieslage wird üblicherweise aus mehreren Schichten von Vliesfasern verschiedener Feinheit etc. zusammengesetzt sein. Es kann dabei vorgesehen sein, dass die Bindefasern bzw. die stoffschlüssigen Fügeverbindungen zwischen Bindefasern und weiteren Fasern in allen diesen Schichten auftreten, insbesondere auch, dass diese Fügeverbindungen homogen über die gesamte Vliesauflage verteilt sind.

Alternativ können die Bindefasern bzw. die stoffschlüssigen Fügeverbindungen zwischen Bindefasern und weiteren Fasern nur in einigen der Schichten vorgesehen sein, insbesondere nur in einer dieser Schichten.

Je nach Anwendung kann eine Bespannung lediglich auf einer Seite, üblicherweise auf der papierberührenden Seite, eine Vlieslage aufweisen. Es können aber auch auf Papierseite und Laufseite der Bespannung Vlieslagen vorgesehen sein. In einer solchen Bespannung können entweder nur in der Vlieslage einer Seite oder in beiden Vlieslagen Bindefasern vorgesehen sein.

Es ist zudem vorgesehen, dass sich die Bindefasern von den weiteren Fasern dadurch unterscheiden, dass sie NIR-Strahlung in einem Wellenlängenbereich weitgehend absorbieren, wobei dieser absorbierende Wellenlängenbereich zwischen 780nm und 1100nm, insbesondere zwischen 790 [nm] und 1000 nm, bevorzugt zwischen 820nm- 980nm liegt, während die weiteren Fasern für Strahlung in diesem Wellenlängenbereich ganz oder weitgehend transparent sind. Dies soll im Übrigen nicht bedeuten, dass die Bindefasern zwangsläufig das gesamte Spektrum zwischen 780 nm-1100nm (bzw. 790 - 1000 nm bzw. 800 - 980nm) absorbieren, sondern leidglich, dass es innerhalb dieser Intervalle mindestens einen absorbierenden Wellenlängenbereich gibt. Die Breite des absorbierenden Wellenlängenbereiches kann dabei beispielsweise 50 nm oder 100 nm betragen, aber auch kleiner oder größer sein. Dasselbe gilt -mutatis mutandis- auch für die weiteren Fasern, welche auch lediglich in dem absorbierenden Wellenlängenbereich ganz oder weitgehend transparent zu sein brauchen.

Als absorbierend sollen im Rahmen dieser Anmeldung Fasern bzw. Materialien bezeichnet werden, die mehr als 50% insbesondere mehr als 70% bevorzugt mehr als 85% der eindringenden Strahlung absorbieren.

Als weitgehend absorbierend können auch Fasern oder Materialien bezeichnet werden, die mehr als 40% der eindringenden Strahlung absorbieren.

Als transparent sollen demgegenüber Fasern bzw. Materialien bezeichnet werden, die weniger als 25%, vorteilhafterweise weniger als 15% der eindringenden Strahlung absorbieren.

Solche Vlieslagen sind insbesondere deshalb vorteilhaft, da die stoffschlüssigen Verbindungen zwischen den Bindefasern und den weiteren Vliesfasern mittels Transmissionsschweißen realisiert werden können. Wenn man eine derartige Vlieslage mit Licht im absorbierenden Wellenlängenbereich bestrahlt, so absorbieren die Bindefasern die Energie und heizen sich auf, während das Licht durch die weiteren Fasern hindurch geht, und diese Fasern weitgehend kalt bleiben. Lediglich an Kontaktstellen zwischen einer Bindefaser und einer weiteren Faser heizt sich die Kontaktstelle der weiteren Faser durch die Temperatur der Bindefaser lokal auf. So kann gegebenenfalls die Oberfläche der weiteren Faser lokal anschmelzen und es entsteht eine stoffschlüssige Fügeverbindung zwischen den beiden Fasern, ohne dass die Gefahr einer signifikanten Beschädigung oder Schwächung der Materialeigenschaften der weiteren Faser durch zu hohe Temperaturen besteht.

Das oben gesagte gilt mutatis mutandis auch für die Ausbildung stoffschlüssiger Fügeverbindungen zwischen den Bindefasern und der Grundstruktur.

Hierbei ist anzumerken, dass Grundstrukturen von Bespannungen, wie z.B. Pressfilzen, häufig aus einem Polyamid gefertigt sind. Ebenso ist Polyamid ein häufiges Polymer zur Herstellung von Vliesfasern. Diese Polyamide sind in dem Bereich zwischen 780nm und 1100nm weitgehend transparent.

Bindefasern mit derartigen Absorptionseigenschaften können beispielsweise dadurch realisiert sein, dass in oder an den Bindefasern Absorber-Additive vorgesehen sind, die NIR-Strahlung im Bereich zwischen 780nm und 1100nm insbesondere zwischen 790 nm und 1000 nm, bevorzugt zwischen 820 nm- 980 nm absorbieren.

Vorteilhafterweise kann das Transmissionsschweißen als NIR-Transmissionsschweißen ausgeführt werden.

In weiteren bevorzugten Ausführungen kann das Transmissionsschweißen als LaserTransmissionsschweißen ausgeführt werden. Alternativ kann statt eines Lasers aber auch eine andere Lichtquelle eingesetzt werden.

In ganz besonders bevorzugten Ausführungen kann ein NIR-LaserTransmissionsschweißen eingesetzt werden.

Die Verwendung derartiger Absorber-Additive hat eine Vielzahl von Vorteilen. Zum einen sind sie einfach und relativ günstig erhältlich. So ist beispielsweise Industrieruß ('Carbon Black') ein sehr geeignetes Absorber-Additiv. Es sind aber im Handel auch geeignete nichtfarbige Absorber erhältlich, die beispielsweise unter dem Namen "Clearweld" vertrieben werden.

Zum anderen kann hier das Polymermaterial der Fasern unabhängig von seinen Absorptionseigenschaften gewählt werden. Insbesondere ist es möglich, dass die Bindefasern und die weiteren Fasern aus dem gleichem Polymermaterial bestehen - beispielsweise einem Polyamid, wobei den Bindefasern zur Erzielung des unterschiedlichen Absorptionsverhaltens lediglich das Additiv zugemischt wird. Somit sind, im Gegensatz zu den Klebefasern aus dem Stand der Technik, die Bindefasern kein Fremdkörper in der Vlieslage, sondern weisen weitgehend dieselben Eigenschaften auf, wie die weiteren Fasern.

Ein Absorber-Additiv kann dabei entweder in die Masse der Bindefasern zugegeben werden, und mehr oder minder gleichmäßig über die gesamte Bindefaser verteilt sein. Alternativ kann das Additiv aber auch ganz oder hauptsächlich an der Oberfläche der Bindefasern vorgesehen sein. Dies führt dazu, dass sich auch die Bindefasern bei Bestrahlung in der entsprechenden Wellenlänge, lediglich an der Oberfläche aufheizen und die Bindefaser im Inneren strukturell weitgehend unverändert bleibt. Eine Ausführungsform hierfür sind BiCo-Fasern mit zwei Komponenten, wobei bei ein Kernmaterial, das nicht absorbierend zu sein braucht, mit einem Mantel aus absorbierendem Material umgeben ist.

Dabei ist es vorteilhaft, wenn das Kernmaterial zumindest 40%, insbesondere zwischen 50% und 60% des Volumens der Bindefasern ausmacht.

Bei Bindefasern mit kreisförmigem Durchmesser kann vorgesehen sein, dass der Durchmesser des Kernmaterials mehr als 60%, bevorzugt zwischen 70% und 80% des Durchmessers der Bindefaser ausmacht.

In vorteilhaften Ausführungen kann vorgesehen sein, dass der Anteil der Bindefasern an der gesamten Lage aus Vliesfasern weniger als 30 Gew%, insbesondere weniger als 15 Gew%, besonders bevorzugt weniger als 8 Gew% beträgt. Ein bevorzugter Bereich liegt zwischen 2 Gew% und 6 Gew%.

Ein weiterer Vorteil der Bespannungen gemäß einem Aspekt der Erfindung ist es, dass auch der Anteil der Bindefasern an der gesamten Vlieslage flexibel gewählt werden kann. Er wird in der Praxis häufig so gewählt werden, dass die gewünschte Verbesserung der Faserverankerung erzielt wird. Da die Bindefasern im Wesentlichen dieselben Eigenschaften haben können, wie die weiteren Fasern, führt auch eine Erhöhung des Anteils der Bindefasern nicht zu einer entsprechenden Veränderung der Eigenschaften des Faservlieses. Daher kann in diese Bespannungen auch ein höherer Anteil an Bindefasern eingesetzt werden, als dies bei den bekannten Schmelzfasern möglich ist. Der erwähnte Anteil von 30 Gew% Bindefasern stellt dabei keine Obergrenze dar. Wenn eine weitere Erhöhung der Faserverankerung benötigt wird, ist auch ein noch größerer Anteil an Bindefasern möglich.

Speziell kann vorgesehen sein, dass die weiteren Fasern alle aus dem gleichen Polymermaterial aufgebaut sind.

Dabei kann es vorteilhaft sein, wenn die Bindefasern ganz oder überwiegend aus demselben Polymermaterial bestehen, wie die weiteren Fasern.

Alternativ kann aber auch vorgesehen sein, dass die Bindefasern ganz oder überwiegend aus einem anderen Polymermaterial bestehen als die weiteren Fasern. Überwiegend bedeutet dabei zu mehr als 50 Gew%.

Vorteilhaft ist es, wenn die Materialpaarung der Bindefasern und der weiteren Fasern kompatibel sind in dem Sinn, dass sie miteinander eine stabile Schweißverbindung eingehen. Bei gleichem Polymeren ist dies natürlicherweise der Fall. Ein Beispiel für eine kompatible Paarung unterschiedlicher Polymere ist PA 6 mit PA 6.6.

Ein Nachteil der bekannten Schmelzfasern ist es ja, dass diese zwingend einen Schmelzpunkt aufweisen müssen, der unterhalb des Schmelzpunkts der weiteren Fasern liegt. Von dieser Restriktion ist man bei einer Bespannung gemäß einem Aspekt der vorliegenden Erfindung befreit.

Insbesondere kann nämlich vorteilhafterweise vorgesehen sein, dass die Schmelztemperatur der Bindefaser gleich oder höher ist, als die der weiteren Fasern. Dies wird möglich, da nicht die gesamte Vlieslage durcherhitzt wird, sondern nur die Bindefasern oder auch nur die Fügestelle zwischen den Fasern.

Betrachtet man eine Ausführung mit absorbierenden Bindefasern, so kann man die Vlieslage so lange mit dem geeigneten Licht (z.B. Laserlicht) bestrahlen, bis die Bindefasern durch Absorption der Energie in die Nähe ihres Schmelzpunkts erhitzt worden sind. Da die weiteren Fasern transparent sind, erwärmen sich diese nicht, oder allenfalls im Bereich der Kontaktstellen zu den Bindefasern. Daher kann die Schmelztemperatur der Bindefasern auch höher liegen als die der weiteren Fasern, ohne dass bei der Herstellung der stoffschlüssigen Fügeverbindungen die weiteren Fasern strukturell beschädigt werden.

Es kann vorteilhaft sein, wenn die Bindefasern ganz oder überwiegend aus einem Polyamid, einem Copolyamid, Polyurethan oder Polyether-co-Polyamid-Blockpolymer (PEBA) bestehen.

Überwiegend bedeutet dabei zu mehr als 50 Gew%. Insbesondere können die Bindefasern neben dem Polymermaterial noch Additive enthalten. Dabei kann es sich um Absorber-Additive und/oder um andere geeignete Additive handeln.

Bei den weiteren Fasern muss es sich nicht um vollkommen gleichartige Fasern handeln. Es kann vorteilhafterweise vorgesehen sein, dass die weiteren Fasern zumindest zwei Typen B1 und B2 von Fasern umfassen, wobei sich Typ B1 und Typ B2 insbesondere in Titer und/oder Polymermaterial unterscheiden können.

Insbesondere mit Blick auf den Fasertiter können selbstverständlich auch mehr als zwei Typen von weiteren Fasern vorgesehen sein.

Im Falle, dass mehrere Typen von weiteren Fasern vorgesehen sind, ist das Merkmal, dass sich die Bindefasern und die weiteren Fasern in zumindest einer Materialeigenschaft unterscheiden, so zu verstehen, dass es ein Merkmal gibt, in dem sich die Bindefasern von allen weitern Fasern unterscheidet. Dies kann insbesondere das Absorptionsverhalten sein.

So können beispielsweise weitere Fasern aus einem Polyamid zusammen mit weiteren Fasern aus einem Polyurethan vorgesehen sein. Dabei sind beide Typen weiterer Fasern für Licht im Bereich 780nm und 1100nm transparent gewählt, während die Bindefasern Licht in diesem Bereich absorbieren. Dadurch kann der bereits beschriebene Prozess des Transmissionsschweißens durchgeführt werden.

Als Grundstruktur sind alle aus dem Bereich der Bespannungen bekannten Grundstrukturen geeignet. Insbesondere kann vorgesehen sein, dass die Grundstruktur ein Gewebe, ein Gelege oder eine Folie umfasst, oder daraus besteht.

Für die Herstellung der Bespannung kann es vorteilhaft sein, wenn die Grundstruktur im Bereich zwischen 780nm und 1100nm, insbesondere zwischen 790 nm und 1000 nm, bevorzugt zwischen 820 nm - 980nm für Licht transparent ist.

Vorteilhaft kann es sein, wenn die Lage aus Vliesfasern durch Vernadeln mit der Grundstruktur verbunden ist. Die Kombination aus Vernadelung und der beschriebenen stoffschlüssigen Fügeverbindungen führt zu einer stark verbesserten Faserverankerung.

Weiterhin kann vorgesehen sein, dass ein Teil der Bindefasern mit einer oder Bindefasern über eine stoffschlüssige Fügeverbindung, insbesondere eine Schweißverbindung verbunden sind.

Hinsichtlich des Verfahrens wird die Aufgabe gelöst durch ein Verfahren zur Herstellung einer Bespannung insbesondere eines Pressfilzes für eine Maschine zur Herstellung oder Verarbeitung einer Faserstoffbahn, wobei das Verfahren die Schritte umfasst:
a) Anordnen einer Lage aus Vliesfasern auf einer Grundstruktur, wobei die Lage Bindefasern und weitere Fasern umfasst, die sich in zumindest einer Materialeigenschaft unterscheiden
b) Erzeugen stoffschlüssiger Fügeverbindungen zwischen Bindefasern und weiteren Fasern durch gezielten Energieeintrag

Auch hier sind vorteilhafte Ausführungen in den abhängigen Ansprüchen beschrieben.

Bevorzugt kann vorgesehen sein, dass die Lage aus Vliesfasern Bindefasern umfasst, die NIR-Strahlung in einem Wellenlängenbereich absorbiert, der zwischen 780nm und 1100nm liegt und der gezielte Energieeintrag durch Bestrahlung in diesem Wellenlängenbereich erfolgt.

Weiterhin kann vorgesehen sein, dass die Bestrahlung bei Einwirkung eines Fügedrucks auf die Vlieslage erfolgt.

In einer vorteilhaften Ausführung kann vorgesehen sein, dass das Verfahren den Schritt umfasst
c) Verbinden der Lage aus Vliesfasern mit der Grundstruktur, wobei das Verbinden insbesondere durch Vernadeln realisiert werden kann.

Der Schritt c kann vor oder nach dem Schritt b. durchgeführt werden.

Wird das Vernadeln vor dem Energieeintrag durchgeführt, und erfolgt der Energieeintrag durch NIR-(Laser)-transmissionsschweißen, so ist es vorteilhaft, wenn die Grundstruktur für das verwendete Laserlicht weitgehend transparent ist, da ansonsten die Gefahr besteht, dass sich die Grundstruktur durch den Energieeintrag aufheizt und möglicherweise beschädigt wird.

Es kann vorgesehen sein, dass der gezielte Energieeintrag durch Bestrahlen von einer Seite oder von beiden Seiten der Lage aus Vliesfasern erfolgt. Ein Bestrahlen von beiden Seiten kann dabei entweder zeitgleich oder eine Seite nach der anderen erfolgen.

Im Folgenden wird die Erfindung anhand schematischer, nicht maßstäblicher Figuren weiter erläutert.
Figur 1 zeigt einen Ausschnitt aus einer Bespannung gemäß einem Aspekt der Erfindung.
Figur 2 zeigt eine stoffschlüssige Fügeverbindung gemäß einem weiteren Aspekt der Erfindung.

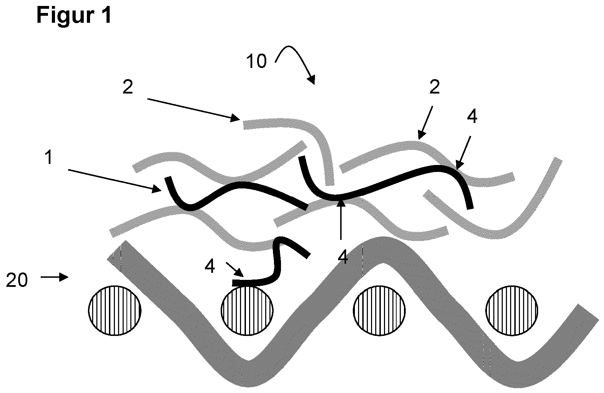

Figur 1 zeigt schematisch einen kleinen Ausschnitt einer Bespannung gemäß einem Aspekt der Erfindung. Die Bespannung ist dabei als Pressfilz ausgeführt. Hier umfasst der Filz eine Vlieslage 10 und eine Grundstruktur 20, die hier als Grundgewebe 20 ausgeführt ist. Alternativ sind aber auch andere Grundstrukturen 20 wie beispielsweise Gelege oder Folienstrukturen denkbar. Die Vlieslage 10 umfasst dabei eine Anzahl an Bindefasern 1 sowie weitere Fasern 2. An einer Anzahl von Fügestellen sind die Bindefasern 1 über stoffschlüssige Fügeverbindungen 4 mit den weiteren Fasern 2 verbunden. Wie in Figur 1 exemplarisch gezeigt, können die Bindefasern auch mit der Grundstruktur 20 über stoffschlüssige Fügeverbindungen 4 verbunden sein. In Figur 1 besteht die Fügeverbindung 4 zwischen einem Kett- oder Schussfaden der gewebten Grundstruktur 20.

In vorteilhaften Ausführungen wird die Vlieslage 10 mit dem Grundgewebe 20 zudem noch durch Vernadeln verbunden sein. Dies führt auch noch zu einer zusätzlichen, mechanischen Verbindung der Vliesfasern untereinander.

Der in Figur 1 gezeigte Filz weist nur auf einer Seite, und zwar auf der Papierseite, eine Vlieslage 10 auf. Alternativ kann auf der Laufseite eine weitere Vlieslage vorgesehen sein. Diese kann mit oder ohne Bindefasern gemäß einem Aspekt der Erfindung ausgeführt sein.

Die weiteren Fasern 2 der Vlieslage 10 können alle gleichartig sein. Häufig werden sie sich aber in Eigenschaften wie dem Faserdurchmesser oder Titer bzw. unter Umständen auch dem verwendeten Polymermaterial unterscheiden. Die Bindefasern 1 unterscheiden sich von den weiteren Fasern 2 in dem Beispiel der Figur 1 dadurch, dass sie NIR-Strahlung in einem Bereich zwischen 780nm und 1100nm weitgehend absorbieren, während die weiteren Fasern für Strahlung in diesem Wellenlängenbereich ganz oder weitgehend transparent sind. So lassen sich die stoffschlüssigen Fügeverbindungen in Form von Schweißverbindungen einfach mittels NIR Lasertransmissionsschweißen herstellen.

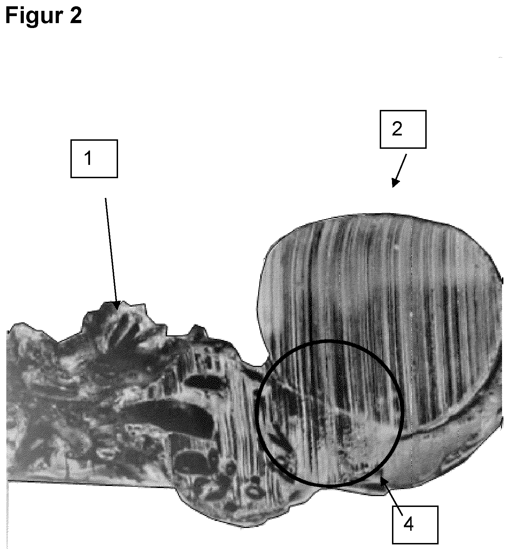

Figur 2 zeigt eine solche Schweißverbindung 4. Dabei ist eine weitere Fasern 2 mit einer Bindefaser 1 durch eine Schweißverbindung verbunden. Die Bindefaser 1 ist in diesem Fall aus dem gleichen Material, wie die weitere Faser 2, nämlich einem Polyamid. Das Verwenden des gleichen Polymermaterials für beide Fasern 1, 2 hat unter anderem den Vorteil, dass die Schweißverbindung 4 homogener und haltbarer wird als beim Fügen unterschiedlicher Materialien. Durch Zugabe eines Absorber-Additivs in Form von Ruß wurde die Bindefaser 1 im Bereich zwischen 780nm und 1100nm weitgehend absorbierend. In Figur 2 wurde dabei das Absorber-Additiv in die Bindefaser 1 zugegeben, was bei der Verwendung von Ruß an der durchgehenden Schwarzfärbung erkennbar ist. Alternativ kann ein Absorber-Additiv auch lediglich an der Oberfläche der Bindefaser 1 vorgesehen sein.

### Bezugszeichenliste

- 1: Bindefaser
- 2: weitere Fasern
- 3: Grundstruktur
- 4: stoffschlüssige Fügeverbindungen
- 10: Vlieslage
- 20: Grundstruktur

## Patentansprüche

1. Bespannung insbesondere Pressfilz für eine Maschine zur Herstellung oder Verarbeitung einer Faserstoffbahn, umfassend eine Grundstruktur (20) und zumindest eine auf der Grundstruktur (20) angeordnete Lage aus Vliesfasern (10) wobei die Lage aus Vliesfasern (10) Bindefasern (1) sowie weitere Fasern (2) aufweist, wobei sich die Bindefasern (1) und die weiteren Fasern (2) in zumindest einer Materialeigenschaft unterscheiden, und wobei zumindest ein Teil der Bindefasern (1) mit einer oder mehreren weiteren Fasern (2) und/oder Elementen der Grundstruktur (20) über eine Schweißverbindung (4) verbunden sind, **dadurch gekennzeichnet, dass** sich die Bindefasern (1) von den weiteren Fasern (2) dadurch unterscheiden, dass sie NIR-Strahlung in einem Bereich weitgehend absorbieren, der zwischen 780nm und 1100nm liegt, während die weiteren Fasern (2) für Strahlung in diesem Wellenlängenbereich ganz oder weitgehend transparent sind.

2. Bespannung nach einem der vorherigen Ansprüche, **dadurch gekennzeichnet, dass** in den Bindefasern (1) Absorber-Additive vorgesehen sind, die NIR-Strahlung in mindestens einem Wellenlängenbereich absorbieren, der zwischen 780nm und 1100nm liegt.

3. Bespannung nach einem der vorherigen Ansprüche, **dadurch gekennzeichnet, dass** der Anteil der Bindefasern (1) an der gesamten Lage aus Vliesfasern (10) weniger als 30 Gew%, insbesondere weniger als 15 Gew%, besonders bevorzugt weniger als 8 Gew% beträgt.

4. Bespannung nach einem der vorherigen Ansprüche, **dadurch gekennzeichnet, dass** die Bindefasern (1) ganz oder überwiegend aus demselben Polymermaterial bestehen, wie die weiteren Fasern (2).

5. Bespannung nach einem der vorherigen Ansprüche, **dadurch gekennzeichnet, dass** die Bindefasern (1) ganz oder überwiegend aus einem anderen Polymermaterial bestehen als die weiteren Fasern (2).

6. Bespannung nach einem der vorherigen Ansprüche, **dadurch gekennzeichnet, dass** die Schmelztemperatur der Bindefaser (1) gleich oder höher ist, als die der weiteren Fasern (2).

7. Bespannung nach einem der vorherigen Ansprüche, **dadurch gekennzeichnet, dass** die Bindefasern (1) ganz oder überwiegend aus einem Polyamid, einem Copolyamid, Polyurethan oder Polyether-co-Polyamid-Blockpolymer (PEBA) bestehen.

8. Bespannung nach einem der vorherigen Ansprüche, **dadurch gekennzeichnet, dass** die weiteren Fasern (2) zumindest zwei Typen B1 und B2 von Fasern umfassen, wobei sich Typ B1 und Typ B2 in Titer und/oder Polymermaterial unterscheiden können.

9. Bespannung nach einem der vorherigen Ansprüche, **dadurch gekennzeichnet, dass** die Lage aus Vliesfasern (10) durch Vernadeln mit der Grundstruktur (20) verbunden ist

10. Verfahren zur Herstellung einer Bespannung insbesondere eines Pressfilzes für eine Maschine zur Herstellung oder Verarbeitung einer Faserstoffbahn, wobei das Verfahren die Schritte umfasst,
a. Anordnen einer Lage aus Vliesfasern (10) auf einer Grundstruktur (20), wobei die Lage (10) Bindefasern (1) und weitere Fasern (2) umfasst, die sich in zumindest einer Materialeigenschaft unterscheiden,
b. Erzeugen stoffschlüssiger Fügeverbindungen (4) zwischen Bindefasern (1) und weiteren Fasern (2) durch gezielten Energieeintrag,
wobei die Lage aus Vliesfasern (10) Bindefasern (1) umfasst, die NIR-Strahlung in einem Bereich absorbieren, der zwischen 780nm und 1100nm liegt, während die weiteren Fasern (2) für Strahlung in diesem Wellenlängenbereich ganz oder weitgehend transparent sind. und der gezielte Energieeintrag durch Bestrahlung in diesem absorbierenden Wellenlängenbereich erfolgt.

11. Verfahren nach Anspruch 10, **dadurch gekennzeichnet, dass** der gezielte Energieeintrag durch Bestrahlen von einer Seite oder von beiden Seiten der Lage aus Vliesfasern (10) erfolgt.

12. Verfahren nach einem der Ansprüche 10 bis 11, **dadurch gekennzeichnet, dass** die Bestrahlung bei Einwirkung eines Fügedrucks auf die Lage aus Vliesfasern (10) erfolgt.

13. Verfahren nach einem der Ansprüche 10 bis 12, **dadurch gekennzeichnet, dass** das Verfahren den Schritt umfasst
c. Verbinden der Lage aus Vliesfasern (10) mit der Grundstruktur (20), wobei das Verbinden insbesondere durch Vernadeln realisiert werden kann.

## Claims

1. Covering, in particular press felt, for a machine for producing or processing a fibrous web, comprising a base structure (20) and at least one layer of nonwoven fibers (10) arranged on the base structure (20), the layer of nonwoven fibers (10) having binding fibers (1) and further fibers (2), the binding fibers (1) and the further fibers (2) differing in at least one material property, and wherein at least some of the binding fibres (1) are connected to one or more further fibres (2) and/or elements of the basic structure (20) via a welded joint (4), **characterized in that** the binding fibres (1) differ from the further fibres (2) **in that** they largely absorb NIR radiation in a range lying between 780 nm and 1100 nm, while the further fibres (2) are completely or largely transparent to radiation in this wavelength range.

2. covering according to one of the preceding claims, **characterized in that** absorber additives are provided in the binding fibres (1) which absorb NIR radiation in at least one wavelength range lying between 780 nm and 1100 nm.

3. covering according to one of the preceding claims, **characterized in that** the proportion of the binding fibres (1) in the entire layer of nonwoven fibres (10) is less than 30% by weight, in particular less than 15% by weight, particularly preferably less than 8% by weight.

4. covering according to one of the preceding claims, **characterized in that** the binding fibres (1) consist entirely or predominantly of the same polymer material as the other fibres (2).

5. covering according to one of the preceding claims, **characterized in that** the binding fibres (1) consist entirely or predominantly of a different polymer material than the other fibres (2).

6. covering according to one of the preceding claims, **characterized in that** the melting temperature of the binding fibre (1) is equal to or higher than that of the other fibres (2).

7. covering according to one of the preceding claims, **characterized in that** the binding fibres (1) consist entirely or predominantly of a polyamide, a copolyamide, polyurethane or polyether-co-polyamide block polymer (PEBA).

8. covering according to one of the preceding claims, **characterized in that** the further fibres (2) comprise at least two types B1 and B2 of fibres, wherein type B1 and type B2 may differ in titre and/or polymer material.

9. covering according to one of the preceding claims, **characterized in that** the layer of nonwoven fibres (10) is connected to the base structure (20) by needling

10. method for producing a covering, in particular a press felt, for a machine for producing or processing a fibrous web, the method comprising the steps of
a. arranging a layer of nonwoven fibers (10) on a base structure (20), the layer (10) comprising binder fibers (1) and other fibers (2) which differ in at least one material property
b. producing material-bonded joints (4) between binding fibers (1) and further fibers (2) by targeted energy input,
wherein the layer of nonwoven fibers (10) comprises binding fibers (1) which absorb NIR radiation in a range lying between 780 nm and 1100 nm, while the other fibers (2) are completely or largely transparent to radiation in this wavelength range, and the targeted energy input is effected by irradiation in this absorbing wavelength range.

11. process according to claim 10, **characterized in that** the targeted energy input takes place by irradiation from one side or from both sides of the layer of nonwoven fibres (10).

12. method according to one of claims 10 to 11, **characterized in that** the irradiation takes place when a joining pressure is applied to the layer of nonwoven fibres (10).

13. method according to any one of claims 10 to 12, **characterized in that** the method comprises the step of
c. bonding the layer of nonwoven fibers (10) to the base structure (20), wherein the bonding can be realized in particular by needling.

## Revendications

1. Entoilage, en particulier feutre de presse pour une machine de fabrication ou de traitement d'une bande de matière fibreuse, comprenant une structure de base (20) et au moins une couche de fibres non tissées (10) disposée sur la structure de base (20), la couche de fibres non tissées (10) présentant des fibres de liaison (1) ainsi que d'autres fibres (2), les fibres de liaison (1) et les autres fibres (2) se distinguant par au moins une propriété de matériau, et au moins une partie des fibres de liaison (1) étant reliée à une ou plusieurs autres fibres (2) et/ou à des éléments de la structure de base (20) par une liaison soudée (4), **caractérisé en ce que** les fibres de liaison (1) se distinguent des autres fibres (2) par le fait qu'elles absorbent largement le rayonnement NIR dans une plage qui se situe entre 780 nm et 1100 nm, tandis que les autres fibres (2) sont entièrement ou largement transparentes au rayonnement dans cette plage de longueurs d'onde.

2. Habillage selon l'une des revendications précédentes, **caractérisé en ce que** des additifs absorbants sont prévus dans les fibres de liaison (1), lesquels absorbent le rayonnement NIR dans au moins une plage de longueurs d'onde qui se situe entre 780 nm et 1100 nm.

3. Entoilage selon l'une des revendications précédentes, **caractérisé en ce que** la proportion de fibres de liaison (1) par rapport à la couche totale de fibres non tissées (10) est inférieure à 30 % en poids, en particulier inférieure à 15 % en poids, de préférence inférieure à 8 % en poids.

4. Entoilage selon l'une des revendications précédentes, **caractérisé en ce que** les fibres de liaison (1) sont entièrement ou principalement constituées du même matériau polymère que les autres fibres (2).

5. entoilage selon l'une des revendications précédentes, **caractérisé en ce que** les fibres de liaison (1) sont constituées entièrement ou principalement d'un matériau polymère différent de celui des autres fibres (2).

6. Habillage selon l'une des revendications précédentes, **caractérisé en ce que** la température de fusion des fibres de liaison (1) est égale ou supérieure à celle des autres fibres (2).

7. Habillage selon l'une des revendications précédentes, **caractérisé en ce que** les fibres de liaison (1) sont entièrement ou principalement constituées d'un polyamide, d'un copolyamide, d'un polyuréthane ou d'un polymère séquencé polyéther-co-polyamide (PEBA).

8. Habillage selon l'une quelconque des revendications précédentes, **caractérisé en ce que** les autres fibres (2) comprennent au moins deux types B1 et B2 de fibres, le type B1 et le type B2 pouvant différer en titre et/ou en matériau polymère.

9. Entoilage selon l'une quelconque des revendications précédentes, **caractérisé en ce que** la couche de fibres non tissées (10) est liée à la structure de base (20) par aiguilletage.

10. Procédé de fabrication d'un entoilage, notamment d'un feutre de presse, pour une machine de fabrication ou de traitement d'une nappe fibreuse, ledit procédé comprenant les étapes suivantes ,
a. Disposer une couche de fibres non tissées (10) sur une structure de base (20), la couche (10) comprenant des fibres de liaison (1) et d'autres fibres (2) qui se distinguent par au moins une caractéristique de matériau,
b. création d'assemblages (4) par liaison de matière entre les fibres de liaison (1) et les autres fibres (2) par un apport d'énergie ciblé,
la couche de fibres non tissées (10) comprenant des fibres de liaison (1) qui absorbent le rayonnement NIR dans une plage qui se situe entre 780 nm et 1100 nm, tandis que les autres fibres (2) sont entièrement ou largement transparentes au rayonnement dans cette plage de longueurs d'onde. et l'apport d'énergie ciblé s'effectuant par irradiation dans cette plage de longueurs d'onde absorbante.

11. Procédé selon la revendication 10, **caractérisé en ce que** l'apport d'énergie ciblé s'effectue par irradiation d'un côté ou des deux côtés de la couche de fibres non tissées (10).

12. Procédé selon l'une des revendications 10 à 11, **caractérisé en ce que** l'irradiation est effectuée sous l'effet d'une pression d'assemblage sur la couche de fibres non tissées (10).

13. Procédé selon l'une quelconque des revendications 10 à 12, **caractérisé en ce que** le procédé comprend l'étape consistant à
c. l'assemblage de la nappe de fibres non tissées (10) avec la structure de base (20), ledit assemblage pouvant notamment être réalisé par aiguilletage.
